# EUROPEAN PATENT APPLICATION

(11) **EP 2 270 653 A1**
(43) Date of publication of application: **05.01.2011**
(21) Application number: 08720594.4
(22) Date of filing: 25.03.2008
(51) Int. Cl.: G06F 9/38

(54) **MULTIPROCESSOR**

(71) Applicant: Fujitsu Limited, Kawasaki-shi, Kanagawa 211-8588 (JP)
(72) Inventor: YOSHIZAWA, Hideki, Kawasaki-shi Kanagawa 211-8588 (JP)
(74) Representative: HOFFMANN EITLE
(86) International application number: PCT/JP2008/000715
(87) International publication number: WO 2009/118776

(57) **Abstract**

A multiprocessor of a single processor, including a pipeline processing unit which successively fetches an instruction sequence to be independently processed on each of the multiprocessor with a shifted phase in one cycle.

## Description

### TECHNICAL FIELD

The present invention relates to a multiprocessor.

### BACKGROUND ART

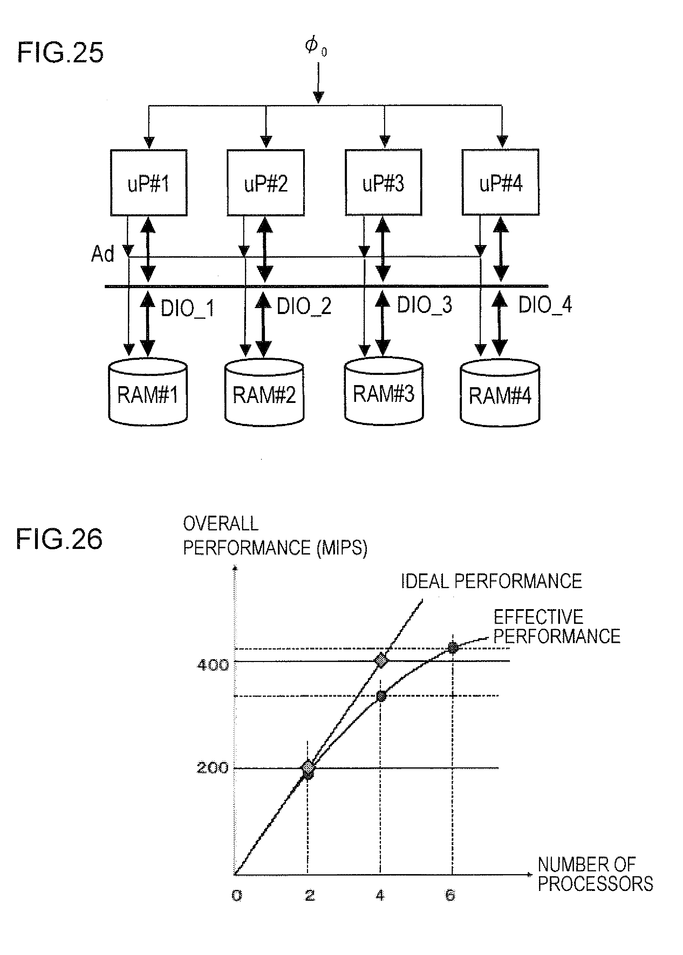

Conventionally, there is a multiprocessor having a plurality of processors integrated into a single chip. FIG. 25 is a diagram illustrating an exemplary configuration of the conventional multiprocessor (for example, refer to the non-patent document 1 bellow). The multiprocessor includes four processors up#1-up#4 on one chip.

To integrate the plurality of processors up#1-up#4 into one chip, the multiprocessor needs to have logic circuits for each processor up#1-up#4 mounted on the chip. For this purpose, the use of a memory in common allows information sharing among each processor up#1-up#4, which also prevents an increased circuit scale. For example, as a multiprocessor configured of a shared memory, models such as UMA (UniformMemory Architecture) and NUMA (Non-uniform Memory Architecture) are known.

In addition, as the conventional multiprocessor, there has been disclosed a memory control method in which a memory is used in time sharing by a plurality of processors that are operated by clocks each having a phase successively shifted by 1/4 cycle (for example, refer to the following patent document 1).
Non-patent document 1: "Asymmetric multiprocessing technique" Toshio Uno, AI Publishing Inc., August 13, 2001.
Patent document 1: The official gazette of the Japanese Unexamined Patent Publication No. Sho-56-099559.

### DISCLOSURE OF THE INVENTION

### PROBLEMS TO BE SOLVED BY THE INVENTION

However, even if the memory is used in common, an ideal performance cannot always be obtained in the multiprocessor because of an access restriction to the memory (refer to FIG. 26). In addition, if the number of processors is increased, a circuit scale becomes increased. Space saving is particularly required in information apparatus like mobile phones.

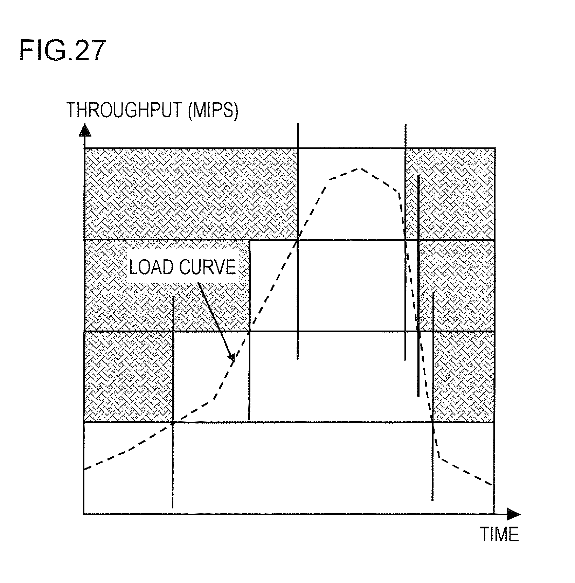

Further, the number of processors to be mounted is determined to satisfy maximum performance required in the design stage. FIG. 27 illustrates relationship of time versus throughput of an overall multiprocessor. A dotted line indicates a load curve of a certain system. As illustrated in the same figure, when a load requiring four (4) processors occurs in a certain time zone, the required number of processors becomes 4. However, in the conventional multiprocessor, there is a problem that overall power is increased because power is supplied to the entire processors even in a low load time zone. Power saving is particularly required in information apparatus like mobile phones.

Accordingly, in consideration of the above problems, it is anobj ect of the present invention to provide multiprocessor achieving space saving.

It is another object of the present invention to provide a multiprocessor achieving power saving.

### MEANS TO SOLVE THE PROBLEMS

A multiprocessor of a single processor, including a pipeline processing unit which successively fetches an instruction sequence to be independently processed on each of the multiprocessor with a shifted phase in one cycle.

### EFFECT OF THE INVENTION

According to the present invention, a multiprocessor achieving space saving can be provided. Also, according to the present invention, a multiprocessor achieving power saving can be provided.

### BRIEF DESCRIPTION OF THE DRAWINGS

[FIG. 1] FIG. 1 illustrates an exemplary configuration of a multiprocessor system.
[FIG. 2] FIG.2 illustrates an exemplary configuration of a clock control unit.
[FIG. 3] FIG. 3 illustrates an exemplary configuration of a fetch stage.
[FIG. 4] FIG. 4 illustrates an exemplary configuration of a decode stage.
[FIG. 5] FIG. 5 illustrates an exemplary configuration of a data read stage.
[FIG. 6] FIG. 6 illustrates an exemplary configuration of a calculation stage.
[FIG. 7] FIG. 7 illustrates an exemplary configuration of a data write stage.
[FIG. 8] FIG. 8 illustrates a timing chart of the multiprocessor.
[FIG. 9] FIG. 9 illustrates an exemplary timing chart of the multiprocessor.
[FIG. 10] FIG. 10 illustrates an exemplary timing chart of the multiprocessor.
[FIG. 11] FIG. 11 illustrates a timing chart of the multiprocessor.
[FIG. 12] FIG. 12 illustrates an exemplary timing chart of the multiprocessor.
[FIG. 13] FIG. 13 illustrates an exemplary timing chart of the multiprocessor.
[FIG. 14] FIG. 14 illustrates a timing chart of the multiprocessor.
[FIG. 15] FIG. 15 illustrates an exemplary timing chart of the multiprocessor.
[FIG. 16] FIG. 16 illustrates an exemplary timing chart of the multiprocessor.
[FIG. 17] FIG. 17 illustrates an exemplary configuration of a clock inverter.
[FIG. 18] FIG. 18 illustrates exemplary state transition and processing of the clock inverter.
[FIG. 19] FIG. 19 illustrates an exemplary timing chart of the clock inverter.
[FIG. 20] FIG. 20 illustrates an exemplary configuration of a pipeline control unit.
[FIG. 21] FIG. 21 illustrates exemplary state transition of the pipeline control unit.
[FIG. 22] FIG. 22 illustrates exemplary definitions of clocks and enables output from a control signal output unit.
[FIG. 23] FIG. 23 illustrates an exemplary timing chart of the pipeline control unit.
[FIG. 24] FIG. 24 illustrates an exemplary configuration of a latch circuit.
[FIG. 25] FIG. 25 illustrates an exemplary configuration of the conventional multiprocessor.
[FIG. 26] FIG. 26 illustrates exemplary relationship between the number of processors and overall performance.
[FIG. 27] FIG. 27 illustrates an exemplary load curve.

### DESCRIPTION OF THE SYMBOLS

- 1:: Multiprocessor system
- 10:: Multiprocessor
- 100:: Fetch stage
- 110:: First pipeline control unit
- 111:: Next state decision unit
- 112:: State memory unit
- 113:: Control signal output unit
- 120 (120-1 to 120-11) - 122 (122-1 to 122-9) :: Latch circuit groups in the first to the third steps
- 126:: D type flip-flop
- 127:: Multiplexer
- 130-133:: Adders (Add)
- 140:: Register
- 150:: First latch circuit
- 200:: Decode stage
- 210:: Second pipeline control unit
- 220 (220-1 to 220-19) - 222 (222-1 to 222-15):: Latch circuit groups in the first to the third steps
- 230-233:: Adders (Add)
- 240-243:: Adders (Add)
- 250:: Second latch circuit
- 300:: Data read stage
- 310:: Third pipeline control unit
- 320 (320-1 to 320-3) - 322 (322-1 to 322-3) :: Latch circuit groups in the first to the third steps
- 330-331:: Multiplexers
- 350:: Third latch circuit
- 400:: Calculation stage
- 410:: Fourth pipeline control unit
- 420 (420-1 to 421-10) - 422 (422-1 to 422-8) :: Latch circuit groups in the first to the third steps
- 430-433:: Arithmetic logic unit (ALU)
- 500:: Data write stage
- 510:: Fifth pipeline control unit
- 520 (520-1 to 520-3) - 522 (522-1 to 522-3):: Latch circuit groups in the first to the third steps
- 600:: Register
- 700:: Instruction RAM
- 800:: Data memory
- 900:: Clock control unit 920-960: First to fifth clock inverters
- 921:: Next state decision unit
- 922:: State memory unit
- 923:: Control signal output unit
- ST:: State
- Md:: Mode
- CKa-CKc:: Clocks
- ENa-ENc:: Enables

### BEST MODE FOR IMPLEMENTING THE INVENTION

The best mode for implementing the present invention will be described hereinafter.

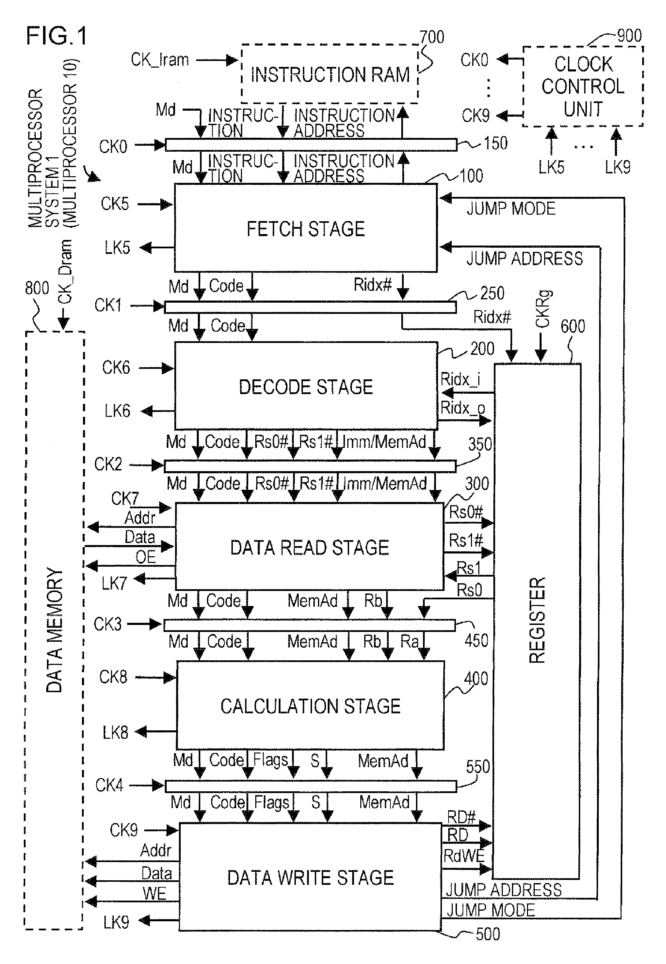

FIG. 1 illustrates a configuration examples of a multiprocessor system 1. The multiprocessor system 1 includes a multiprocessor 10, a instruction RAM 700, a data memory 800, and a clock control unit 900. In FIG. 1, configuration portions illustrated by solid lines represent configurations inside the multiprocessor 10, while portions illustrated by dotted lines represent configurations outside the multiprocessor 10.

The multiprocessor 10 includes a fetch stage 100, a decode stage 200, a data read stage 300, a calculation stage 400, a data write stage 500, a first to fifth latch circuits 150, ..., 550, and a register 600. The present multiprocessor 10 is configured of one processor.

The fetch stage 100 mainly reads out an instruction from the instruction RAM 700 based on a calculated instruction address, and also calculates the next instruction address. Further, the fetch stage 100 includes a program counter to calculate an address to jump to, when the instruction includes a "jump" instruction.

The decode stage 200 mainly outputs an address (MemAd) to read out a data from the data memory 800, as well as data register numbers (Rs0#, Rs1#) to read out data from the register 600, through calculation or the like.

The data read stage 300 mainly reads out a data (Data, Rs1) from the data memory 800 or the register 600, based on the address or the data register number from the decode stage 200.

The calculation stage 400 mainly calculates the instruction, based on a data (Rb) from the data read stage 300 or a data (Ra) from the register 600.

The data write stage 500 mainly stores a calculation result (S), calculated by the calculation stage 400, into the data memory 800 or the register 600.

A cascade connection is formed from the fetch stage 100 to the data write stage 500, and instructions are successively executed through pipeline processing (processing a plurality of instructions with shifted timing in a simultaneous, parallel manner). The detail of each stage 100, ..., 500 will be described later.

Each of the first to fifth latch circuits 150, ..., 550 is provided in the preceding step of each stage 100, ..., 500, and latches the instructions, the addresses, etc. that are output from the instruction RAM 700 and each stage 100, ..., 400. The first to the fifth latch circuits 150, ..., 550 are provided for outputting instructions etc. to each stage 100, ..., 500 in synchronization.

The register 600 is a memory for storing data corresponding to variables included in the instructions. Also, the instruction RAM 700 is a memory for storing the instructions. The data memory 800 is a memory for storing data to be processed.

The clock control unit 900 supplies clocks CK0-CK9 to the stages 100, ..., 500 and the first to the fifth latch circuits 150, ..., 550. The clocks CK0-CK4 are supplied to the first to the fifth latch circuits 150, ..., 550, respectively, while the clocks CK5-CK9 are supplied to the stages 100, ..., 500, respectively. The first to the fifth latch circuits 150, ..., 550 are operated in synchronization with the clocks CK0-CK4, respectively, and the stages 100, ..., 500 are operated in synchronization with the clocks CK5-CK9, respectively.

Additionally, to the clock control unit 900, clocks LK5- LK9 are input from the respective stages 100, ..., 500. The clocks LK5-LK9 are clocks for use in the respective stages 100, ..., 500, so as to be used in the clock control unit 900 to confirm the clocks by which the respective stages 100, ..., 500 are operated.

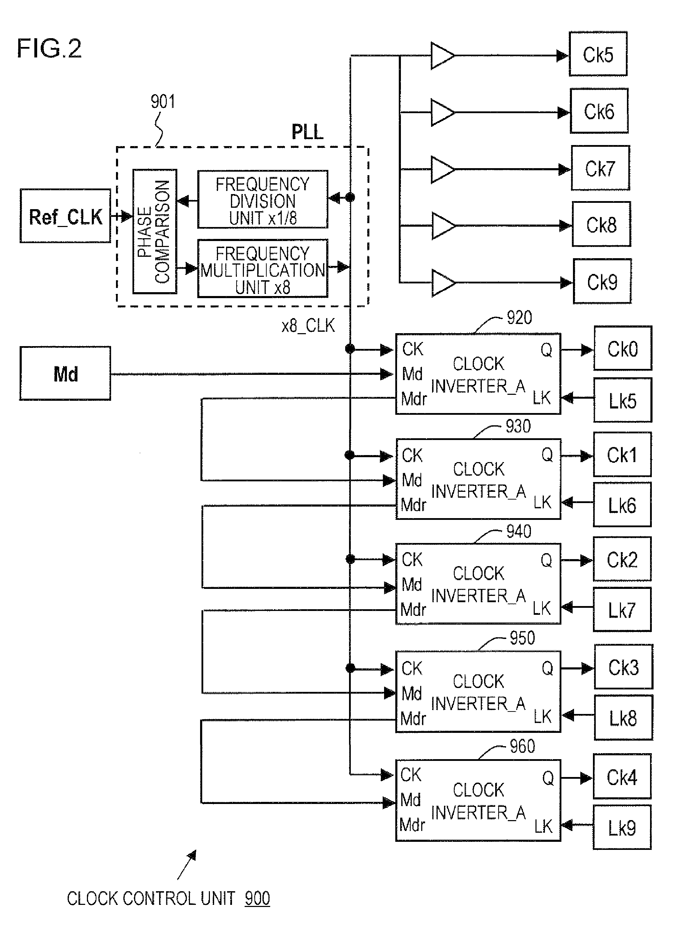

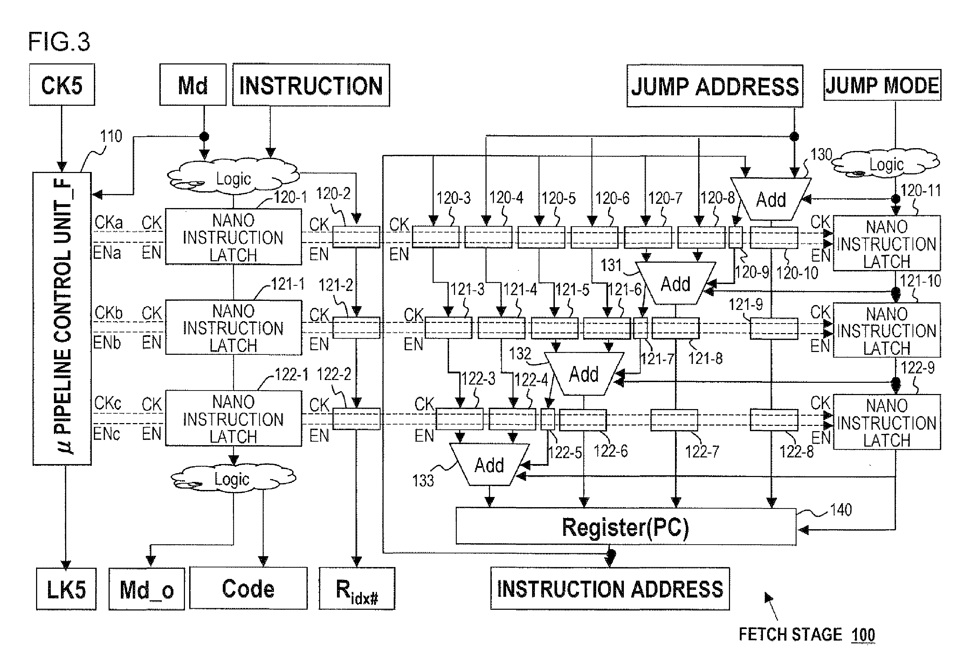

Next, each detailed configuration of the multiprocessor system 1 will be described. First, description is given on the configuration of the clock control unit 900 (FIG. 2), which is followed by the description of the configuration of the respective stages 100, ..., 500 (FIGS. 3 through 7).

FIG. 2 illustrates a configuration example of the clock control unit 900. The clock control unit 900 includes a PLL circuit 901 and a first to fifth clock inverters 920-960.

The PLL circuit 901 generates a clock (×8_CLK) having 1/8 cycle (8-times speed) relative to a reference clock (Ref_CLK), so as to output to the first to the fifth clock inverters 920-960 and to the stages 100, ..., 500 through amplifiers (CK5-CK9). To each stage 100, ..., 500, the 8-times speed clock (×8_CLK) is supplied as each clock CK5-CK9.

Each of the first to the fifth clock inverters 920-960 receives the 8-times speed clock (×8_CLK) and a mode Md as inputs, and according to the internal state thereof, generates and outputs each clock CK0-CK4. The detail of the clock inverters 920-960 will be described later.

Additionally, each clock inverter 920-960 is configured of a flip-flop etc., and acts as state machine of which internal states are successively shifted. The purpose is to output a well-shaped rectangular clock.

Here, description will be given on the mode Md. In the present embodiment, each stage 100, ..., 500 of the multiprocessor 10 is operated in 4-processor mode, 2-processor mode, or 1-processor mode. Each stage 100, ..., 500 includes a pipeline constituted of four steps. By the operation of a certain step according to the mode Md, the multiprocessor 10 is operated in the 4-processor mode, the 2-processor mode, or the 1-processor mode. The mode Md indicates whether the multiprocessor 10 is to be operated in the 4-processor mode, the 2-processor mode, or the 1-processor mode.

Additionally, the mode Md is input to the first latch circuit 150 and the first clock inverter 920 of the clock control unit 900. The mode Md being input to the first latch circuit 150 is output to the fetch stage 100, and is successively output to the second latch circuit 250, the decode stage 200, etc. Also, the mode Md being input to the first clock inverter 920 is successively output to each clock inverter 930-960.

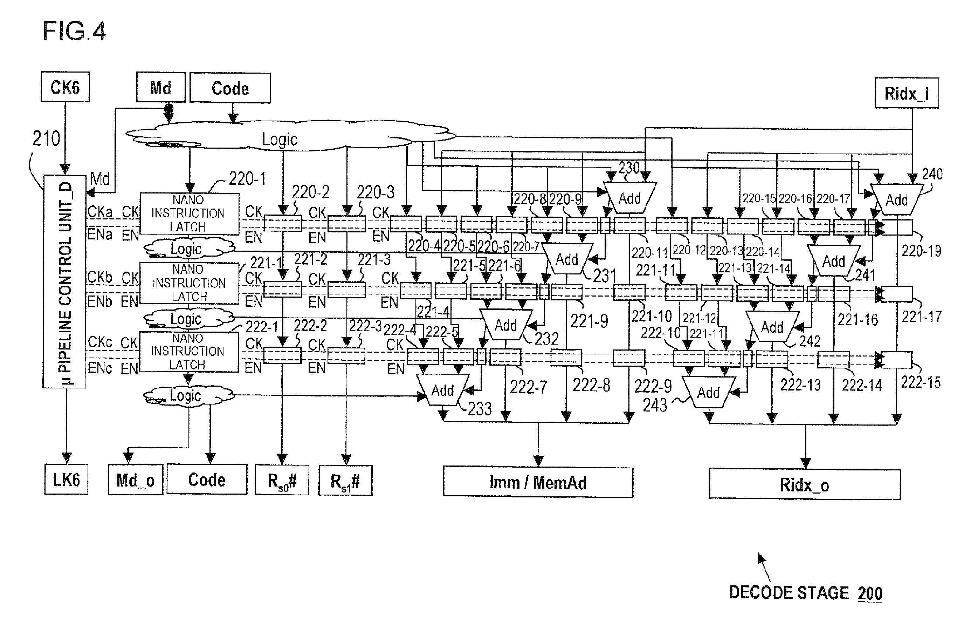

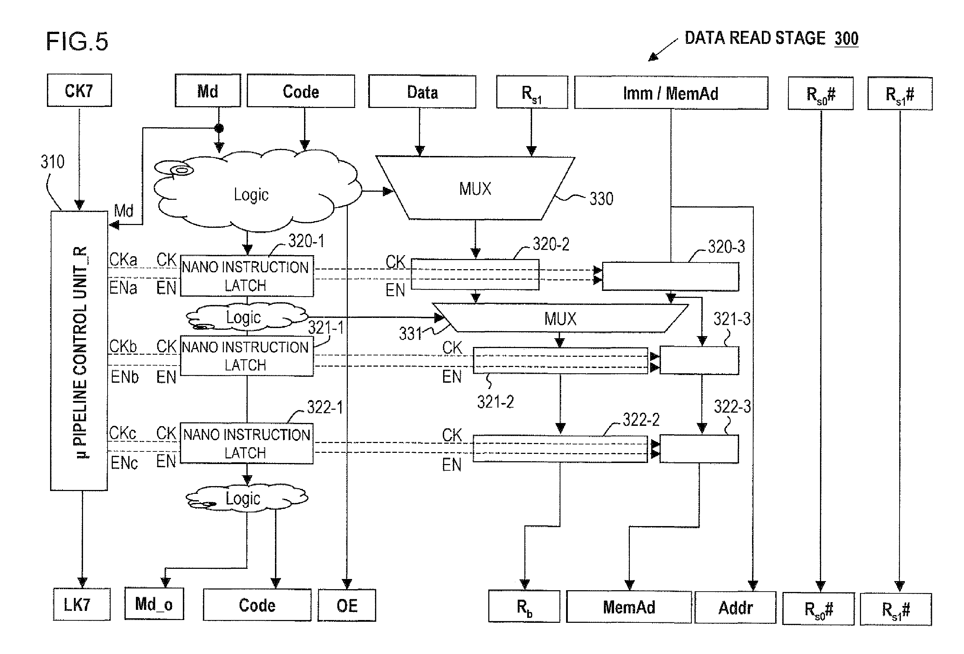

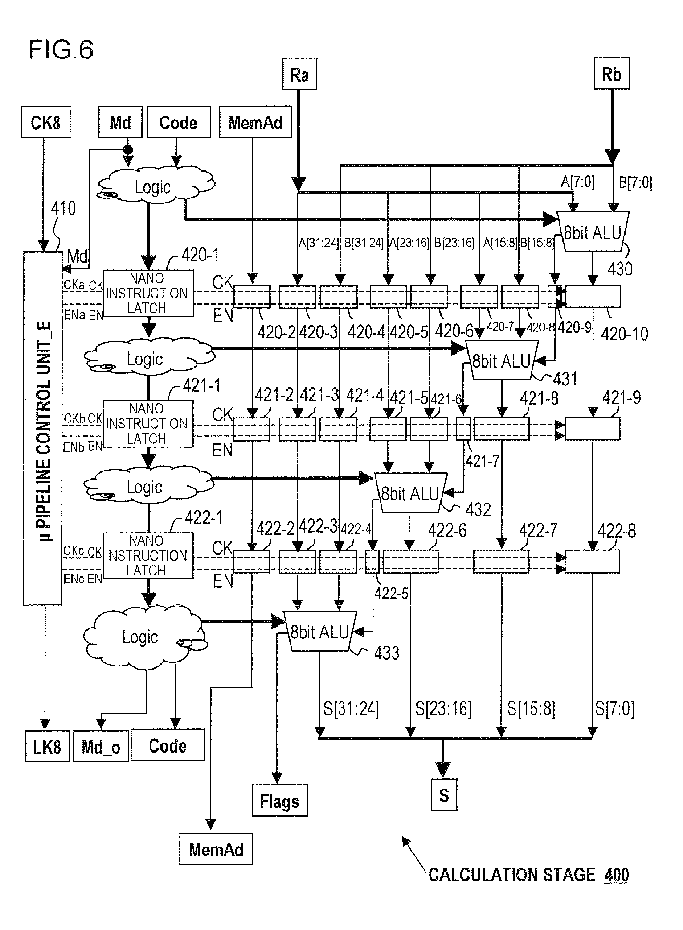

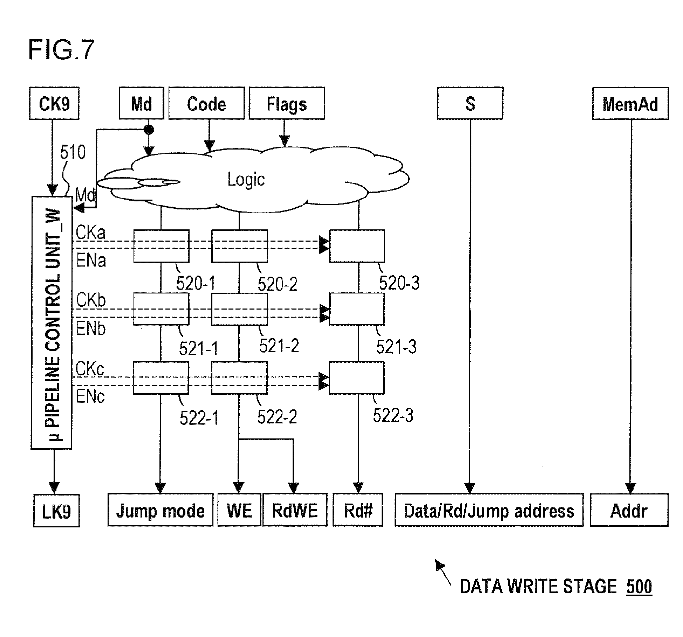

Next, description will be given on each configuration from the fetch stage 100 to the data write stage 500. As configuration examples, respective diagrams are illustrated in regard to the fetch stage 100 in FIG. 3, the decode stage 200 in FIG. 4, the data read stage 300 in FIG. 5, the calculation stage 400 in FIG. 6, and the data write stage 500 in FIG. 7.

As illustrated in FIG. 3, the fetch stage 100 includes: a first pipeline control unit (µ pipeline control unit_F) 110; a latch circuit group in the first step 120-1 to 120-11 (hereafter 120-1 to 120-11 are denoted as 120, unless otherwise noted); a latch circuit group in the second step 121-1 to 121-10 (hereafter 121 in the same way as the above); a latch circuit group in the third step 122-1 to 122-9 (hereafter 122 in the same way as the above); four adders Add 130-133; and a register 140.

The fetch stage 100 performs 4-step pipeline processing by means of the three steps of the latch circuit groups 120-122. Further, the latch circuit groups in the respective steps 120-122 are operated on the basis of clocks CKa-Ckc and enables ENa-ENc fed from the first pipeline control unit 110.

For example, when the entire clocks CKa-CKc and the entire enables ENa-ENc are "high", the entire latch circuit groups in the first to the third steps 120-122 are operated. At this time, the fetch stage 100 is operated in the 4-processor mode, so as to latch and output instructions, addresses, etc. received from upstream.

Also, when the clock CKb and the enable ENb are "high" while the others are "low", only the latch circuit group in the second step 121is operated, and the fetch stage 100 is operated in the 2-processor mode. In this case, the latch circuit group in the second step 121 latches instructions etc. from upstream, while the other latch circuit groups 120, 122 output the instructions etc. from upstream to downstream intact.

Further, when the entire clocks CKa-CKc and the entire enables ENa-ENc are "low", the fetch stage 100 is operated in the 1-processor mode, and the latch circuit groups in the first to the third steps 120-122 output the instructions etc. from upstream intact, without latching.

The first pipeline control unit 110 inputs the mode Md from the first latch circuit 150 and the clock CK5 from the clock control unit 900. According to the internal state, the first pipeline control unit 110 determines which clock CKa-CKc and which enable ENa-ENc are to be set to "high" or "low", and then outputs the determined clocks CKa-CKc and the enables ENa-ENc. The first pipeline control unit 110 acts as state machine internally including a flip-flop etc, aiming to output each clock CKa-CKc and each enable ENa-ENc in well-shaped rectangular waveforms. A detailed description will be given later.

The fetch stage 100 also includes a portion (in the right side of FIG. 3) that functions as a program counter to calculate a jump address in regard to a "jump" instruction.

In the portion that functions as the program counter, each adder Add 130-133 adds respective 8 bits out of a 32-bit address, for example. When the fetch stage 100 is operated in the 4-processor mode, each latch circuit group in each step 120-122 successively latches respective 8 bits out of 32 bits. Also, each adder 130-133 successively adds respective 8 bits latched or the like. Also, when the fetch stage 100 is operated in the 2-processor mode, the latch circuit group in the second step 121 successively latches 16 bits out of the 32-bit address, and each adder 130-133 successively adds 16-bit addresses having been latched or the like.

The register 140 stores the instruction address. Based on the instruction address stored in the register 140, the fetch stage 100 reads out the instruction from the instruction RAM 700. In addition, the register 140 includes four internal registers to retain the outputs from the adder 133 and the latch circuit group 122-6 to 122-8, and outputs the instruction address from the internal register that is selected on the basis of the output from the latch circuit 122-9.

Also, the fetch stage 100 converts the instruction read out from the instruction RAM 700 into an instruction code Code, and outputs the converted instruction. Further, when a variable is included in the instruction, the fetch stage 100 generates and outputs a register number (Ridx#) (which is generally referred to as an index register number) so as to store the variable into the register 600.

Next, description will be given on the decode stage 200. As illustrated in FIG. 4, the decode stage 200 includes: a second pipeline control unit (p pipeline control unit_D) 210; a latch circuit group in the first step 220-1 to 220-19 (hereafter 220-1 to 220-19 are denoted as 220, unless otherwise noted); a latch circuit group in the second step 221-1 to 221-17 (hereafter 221 in the same way as the above); a latch circuit group 222-1 to in the third step 222-15 (hereafter 222 in the same way as the above); and adders 230-233, 240-243.

The decode stage 200 also performs 4-step pipeline processing by means of the latch circuit groups in the first to the third steps 220-222. In regard to the latch circuit groups in the first to the third steps 220-222, on the basis of the clocks CKa-CKc and the enables ENa-ENc that are output from the second pipeline control unit 210, only the latch circuit group in the second step 221 is operated (2-processor mode), or the latch circuit groups in the entire steps 220-222 are operated (4-processor mode), or the latch circuit groups in the entire steps 220-222 pass through the instruction codes etc. (1-processor mode).

The second pipeline control unit 210 inputs the mode Md and the clock CK6 from the clock control unit 900, according to the internal state, determines each clock CKa-CKc and each enable ENa-ENc to be set either "high" or "low", and outputs the clock etc. The second pipeline control unit 210 also acts as state machine in the same way as the first pipeline control unit 110. A detailed description will be given later.

The decode stage 200 reads out from the register 600 a numeric value Ridx_i that is stored in the index register number Ridx#, calculates a memory address MemAd and an immediate value Imm by use of the above numeric value Ridx_i etc., and calculates (updates) the readout numeric value Ridx_i also, so as to output the above values.

For example, with regard to the 32-bit numeric value (Ridx_1) etc., the decode stage 200 obtains the immediate value Imm or the memory address MemAd by adding respective 8 bits in each adder 230-233, and obtains an update value Ridx_o by adding respective 8 bits in each adder 240-243.

Also, the decode stage 200 outputs the input instruction code Code and the mode Md, and generates and outputs the register numbers Rs0#, Rs1#.

Next, description will be given on the data read stage 300. As illustrated in FIG. 5, the data read stage 300 includes: a third pipeline control unit (µ pipeline control unit_R) 310; a latch circuit group in the first step 320-1 to 320-3 (hereafter 320-1 to 320-3 are denoted as 320, unless otherwise noted); a latch circuit group in the second step 321-1 to 321-3 (hereafter 321 in the same way as the above) ; a latch circuit group in the third step 322-1 to 322-3 (hereafter 322 in the same way as the above); and two multiplexers 330, 331.

The data read stage 300 also performs 4-step pipeline processing by means of the latch circuit groups in the first to the third steps 320-322. The latch circuit groups in the respective steps 320-322 are operated on the basis of the clocks CKa-CKc and the enables ENa-ENc that are output from the third pipeline control unit 310. The data read stage 300 is operated in 4-processor mode, 2-processor mode, or 1-processor mode.

The third pipeline control unit 310 inputs the mode Md and the clock CK7 from the clock control unit 900, and according to the internal state, determines each clock CKa-CKc and each enable ENa-ENc to be set either "high" or "low", so as to output the clock etc. The third pipeline control unit 310 also acts as state machine. A detailed description will be given later.

The data read stage 300 outputs the memory address MemAd received from the decode stage 200 to the data memory 800, as a readout address Addr, so as to read out the data Data. Further, the data read stage 300 outputs to the register 600 the register numbers Rs0#, Rs1# input from the decode stage 200, and reads out from the register 600 the data stored in the number concerned (in accuracy, the data Rs1 corresponding to the register number Rs1#).

Then, the multiplexers 330, 331 multiplex and output the data (Data) from the data memory 800 with the data (Rs1) from the register 600, etc. The output value (Rb) becomes one value of binomial calculation. The data read stage 300 perform above-mentioned calculation etc. , while the latch circuit groups 320-322 latch the memory address MemAd etc. according to the clocks CKa-CKc and the enables ENa-ENc.

Further, the data read stage 300 outputs an output enable (OE) relative to the data memory 800. By the output of the data (Data) from the data memory 800 only in a section in which OE is effective, the data can be read out stably when the data memory 800 is an asynchronous SRAM.

Next, description will be given on the calculation stage 400. As illustrated in FIG. 6, the calculation stage 400 includes: a fourth pipeline control unit (µ pipeline control unit E) 410; a latch circuit group in the first step 420-1 to 420-10 (hereafter 420-1 to 420-10 are denoted as 420, unless otherwise noted); a latch circuit group in the second step 421-1 to 421-9 (hereafter 421 in the same way as the above); a latch circuit group in the third step 422-1 to 422-8 (hereafter 422 in the same way as the above); and four arithmetic and logic units (ALU) 430-433.

The calculation stage 400 also performs 4-step pipeline processing by means of the 3-step latch circuit groups 420-422. Based on the clocks CKa-CKc and the enables ENa-ENc fed from the fourth pipeline control unit 410, the calculation stage 400 is operated in 4-processor mode, 2-processor mode, or 1-processor mode.

The fourth pipeline control unit 410 inputs the mode Md and the clock CK8, and according to the internal state, determines each clock CKa-CKc and each enable ENa-ENc to be set either "high" or "low", so as to output accordingly. The fourth pipeline control unit 410 also acts as state machine. The detailed description thereof will be given later.

In the calculation stage 400, the arithmetic and logic units 430-433 perform calculation between one data (Rb) for binomial calculation from the data read stage 300 and another data (Ra: a data corresponding to the register number Rs0#). For example, when each data consists of 32 bits, each arithmetic and logic unit 430-433 in the calculation stage 400 calculates on each 8-bit basis. The calculation stage 400 outputs a calculation result (S) to the data write stage 500. The calculation stage 400 outputs the calculation result (S), while each latch circuit group 420-422 in each step latches the 8 bits obtained by the calculation etc., according to the clocks CKa-CKc and the enables ENa-ENc.

Further, the calculation stage 400 also outputs flags (Flags) indicating whether the calculation result (S) is stored into either the data memory 800 or the register 600.

Next, description will be given on the data write stage 500. As illustrated in FIG. 7, the data write stage 500 includes: a fifth pipeline control unit (p pipeline control unit_W) 510; a latch circuit group in the first step 520-1 to 520-3 (hereafter 520-1 to 520-3 are denoted as 520, unless otherwise noted); a latch circuit group in the second step 521-1 to 521-3 (hereafter 521 in the same way as the above); and a latch circuit group in the third step 522-1 to 522-3 (hereafter 522 in the same way as the above).

The data write stage 500 also performs 4-step pipeline processing by means of the latch circuit groups in the first to the third steps 520-522, and is operated in 4-processor mode, 2-processor mode, or 1-processor mode, by the operation of the latch circuit groups in the respective steps 520-522, based on the clocks CKa-CKc and the enables ENa-ENc from the fifth pipeline control unit 510.

The fifth pipeline control unit 510 inputs the mode Md and the clock CK9, and outputs the clocks CKa-CKc and the enables ENa-ENc according to the internal state. The fifth pipeline control unit 510 also acts as state machine. The detailed description thereof will be given later.

When the data write stage 500 stores the calculation result (S) into the data memory 800, the data write stage 500 outputs the calculation result (S) to the data memory 800 as the data (Data), and also outputs an address (Addr) and a write enable (WE) . Also, when storing the calculation result (S) into the register 600, the data write stage 500 outputs the calculation result (S) to the register 600 as a data (Rd), and also outputs a register number (Rd#) and a write enable (RdWE).

Further, when the instruction code (Code) includes the "jump" instruction, the data write stage 500 outputs a "jump mode" indicating the "jump" instruction, and an address (jump address) that is the calculation result (S), to the fetch stage 100. The program counter (configuration portion on the right side of FIG. 3) in the fetch stage 100 calculates the above jump address.

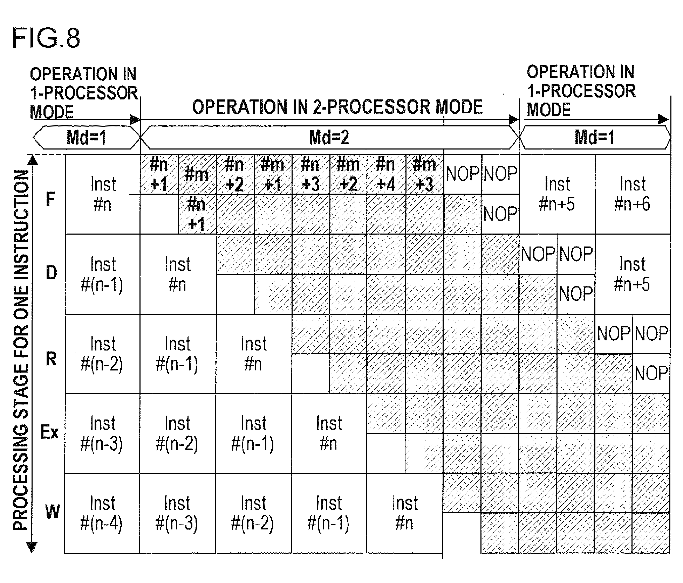

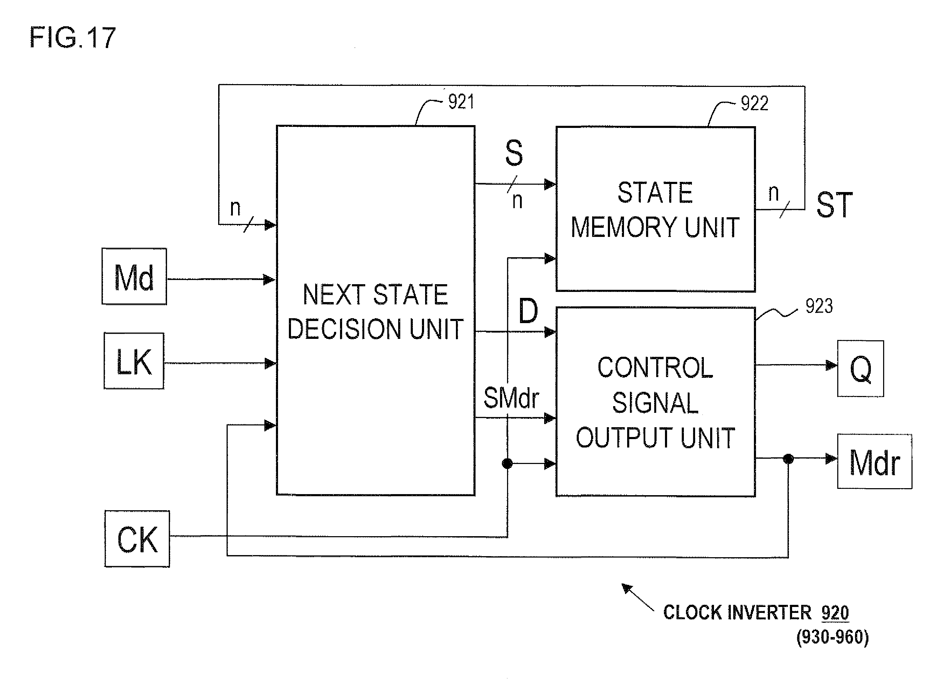

Next, the operation of the present multiprocessor system 1 will be described. For the sake of easy understanding, first, description is given on overall operation (FIGS. 8-16), and subsequently, on the operation etc. of each portion (FIGS. 17-24).

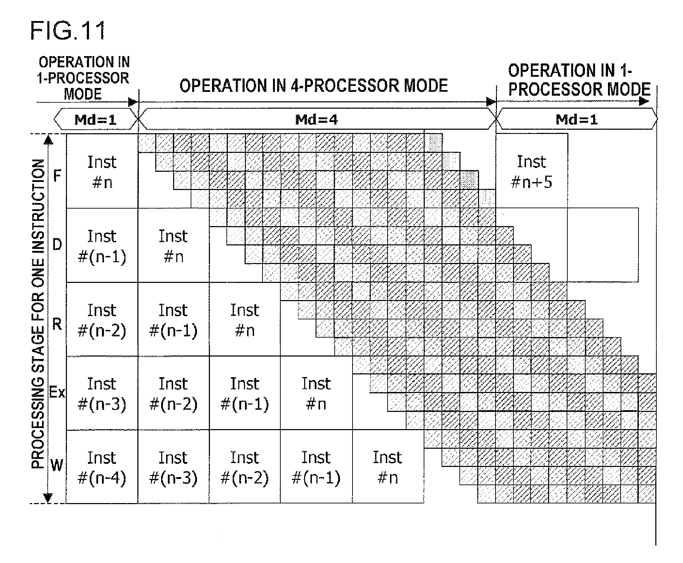

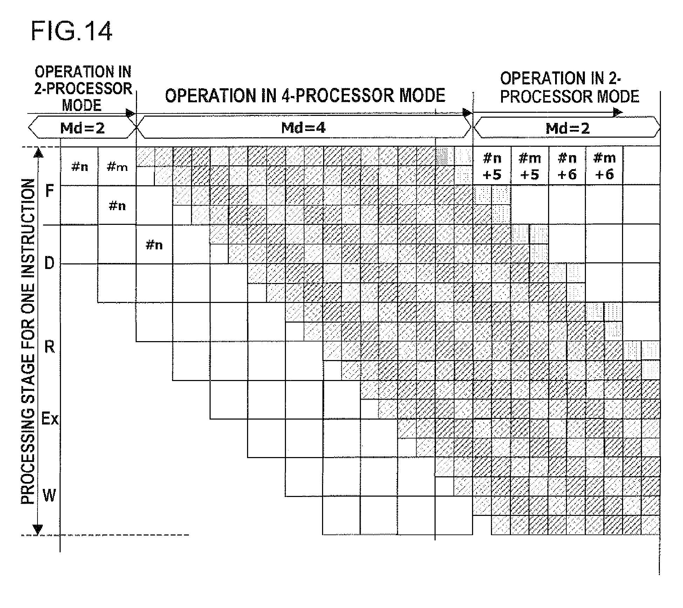

The overall operation is described. FIGS. 8-10 illustrate examples of timing charts in case of changes from the 1-processor mode (Md=1) to the 2-processor mode (Md=2), and further to the 1-processor mode. FIGS. 11-13 illustrate examples of timing charts in case of successive processor mode changes in order of 1 → 4 (Md=4) → 1, and FIGS. 14-16 illustrate a case of successive processor mode changes in order of 2 → 4 → 2. There are other cases of changing the number of processors, and however, such the description will be omitted because the operation of each pipeline control unit 110, ..., 510 is substantially identical.

First, the operation in case of processor mode changes in order of 1 → 2 → 1 is described. In FIGS. 8-16, the vertical direction illustrates the operation of each stage 100, ..., 500, and the horizontal direction illustrates time.

As illustrated in FIG. 8, upon shifting to the 2-processor mode, the fetch stage (F) 100 executes each instruction in a half cyclic period as compared to the 1-processor mode.

Namely, in the first cycle, the fetch stage 100 processes the (#n+1)-th instruction in the preceding step of the second latch circuit group 121. In the second cycle, the fetch stage 100 latches and reads out the (#n+1)-th instruction by the second latch circuit group 121, and also processes the (#m)-th instruction in the preceding step of the second latch circuit group 121.

Then, in the third cycle, the decode stage (D) 200 is shifted to the 2-processor mode and processes the (#n+1)-th instruction, and further, in the fourth cycle, processes the (#n+1)-th instruction and the (#m)-th instruction. Thereafter, in other stages 300-500, similar processing is performed. As illustrated in FIG. 8, each instruction is processed in each stage 100-500 successively in pipeline.

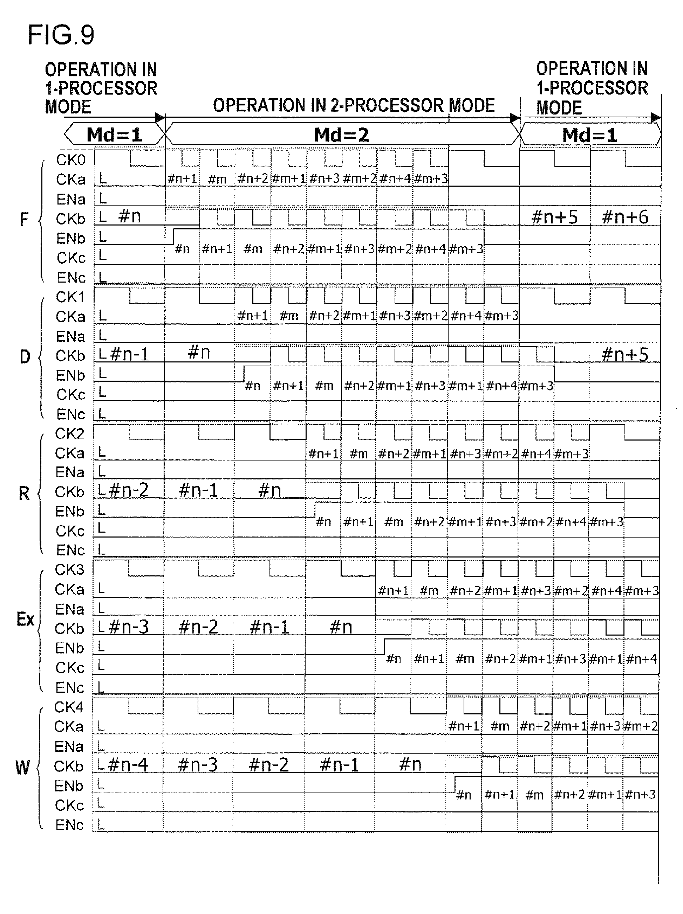

FIG. 9 illustrates an example timing chart substantially similar to FIG. 8, including the clocks (CKa-CKc) and the enables (ENa-ENc) output from each pipeline control unit 110, ... 510.

Each stage 100, ..., 500 is operated as 2-processor mode by operating the latch circuit groups 121, ..., 151 in the second step based on the clock CKb and the enable ENb.

For example, in the fetch stage (F) 100, in the first cycle after being shifted to the 2-processor mode (Md=2), the enable ENb becomes "high", and in the second cycle, the clock CKb also becomes "high". At a rise edge of the clock CKb becoming "high", the second latch circuit group 121 latches an instruction code and an address included in the (#n+1)-th instruction, and outputs the latched instruction code etc, while the clock CKb is kept "high". When the clock CKb falls "low", the second latch circuit group 121 does not work in particular, and instead, processing is made in the adders 130-133 etc. After the shift to the 2-processor mode, the fetch stage 100 repeats the similar processing.

Also, in the third cycle, the decode stage (D) 200 performs the similar processing to the processing performed by the fetch stage (F) 100 in the first cycle, and successively repeats the above processing. From the decode stage (D) 200 to the data write stage (W) 500, each instruction is processed successively in pipeline.

The first to the fifth pipeline control units 110, ..., 510 in the respective stages 100, ... 500 output the clocks CKa-CKc and the enables ENa-ENc in each stage 100, ..., 500. The first to the fifth pipeline control units 110, ..., 510 determine each of the clocks CKa-CKc and the enables ENa-ENc to be set either "high" or "low", based on the mode Md and the present internal state, and then are shifted to the next state.

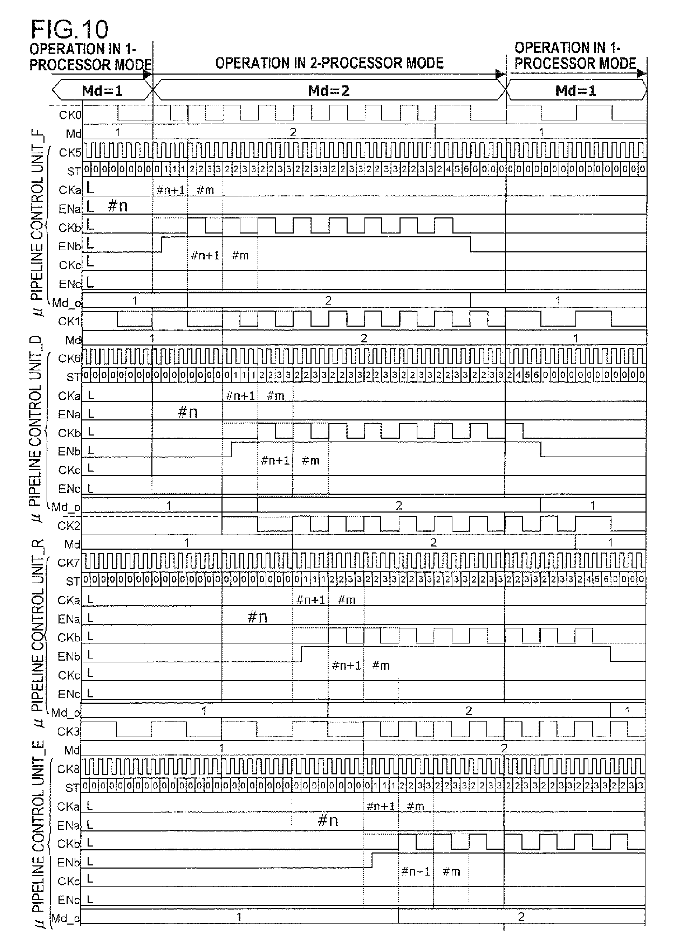

FIG. 10 illustrates an example of timing chart including the state ST of each pipeline control unit 110, ..., 510.

For example, when the first pipeline control unit (µ pipeline control unit_F) 100 has a present state ST of "0" and the mode Md of "2", the first pipeline control unit 100 sets the entire clocks CKa-CKc and the entire enables ENa-ENc "low", and also sets the next state to be "1". Then, when the state ST is shifted to "1" in the next cycle (cycle of 8-times speed clock CK5), the first pipeline control unit 110 outputs a clock etc. with the enable ENb set "high", based on the present state ST "1" and the mode Md "2". Then, the first pipeline control unit 110 again sets the next state to "1". Thereafter, the first pipeline control unit 110 repeats the same processing, and outputs the clocks CKa-CKc and the enables ENa-ENc. The second to the fifthpipeline control units 210, ..., 510 also perform the similar processing. The configurations and the operation of the first to the fifth pipeline control units 110, ..., 510 will be described later.

FIGS. 11-13 illustrate examples of timing charts when the processor mode is changed in order of 1 → 4 → 1. As illustrated in FIG. 11, in case of the 4-processor mode, each stage 100, ..., 500 processes each instruction in 1/4 cyclic period (4-times speed) of the 1-processor mode. Each stage 100, ..., 500 successively performs processing of each instruction in the 1/4 cyclic period.

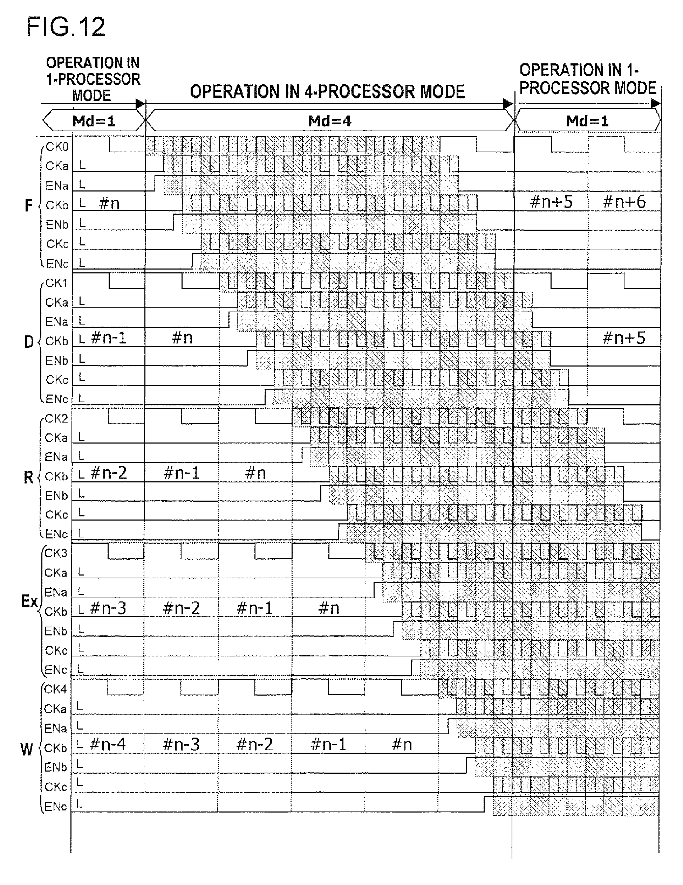

FIG. 12 illustrates an example of timing chart including the clocks CKa-CKc and the enables ENa-ENc. For example, the fetch stage (F) 100 operates the latch circuit group 120 in the first step by setting the clock CKa and the enable ENa "high", and operates the second latch circuit group 121 by setting the clock CKb and the enable ENb "high", and further, operates the third latch circuit group 122 by setting the clock CKc and the enable ENc "high". In the fetch stage 100, each instruction is processed successively in pipeline, and from the fetch stage 100 to the data write stage (W) 500, each instruction is processed in pipeline.

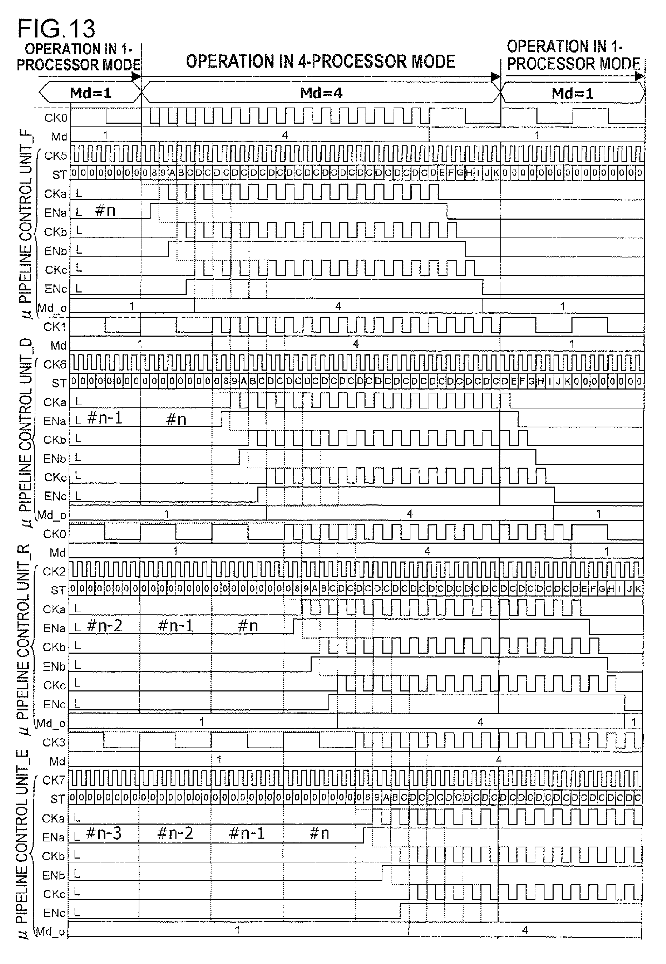

FIG. 13 illustrates an example of timing chart including the state ST. When the first pipeline control unit (µ pipeline control unit_F) 110 has the present state ST "0" and the mode Md "4", the first pipeline control unit 110 sets the next state to be "8", and outputs signals to set the entire clocks ENa-ENc and the entire enables ENa-ENc "low". Also, when the present state ST is "8" and the mode Md is "4", the first pipeline control unit 110 sets the next state to be "9", and outputs a signal to set only the enable ENa "high". The same as the above is applied to the other pipeline control units 210, ..., 510.

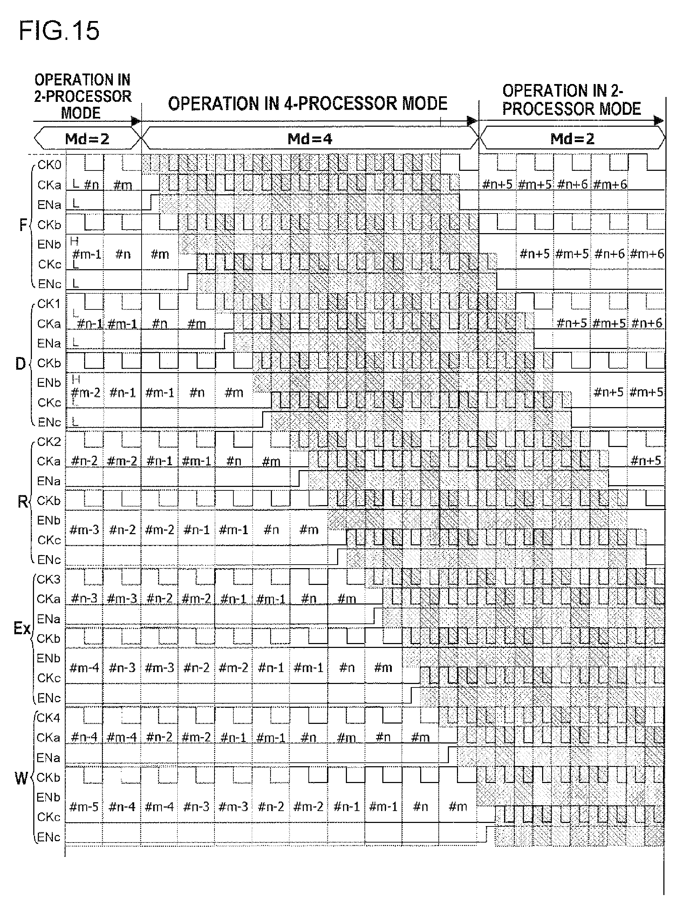

FIGS. 14-16 illustrate examples of timing charts when the processor mode is changed in order of 2 → 4 → 2. As illustrated in FIGS. 14, 15, each stage 100, ..., 500 processes each instruction in 1/2 cyclic period (2-times speed) as compared to the period in the 2-processor mode. Also, each stage 100, ..., 500 is shifted to the 4-processor mode by successively setting the clocks CKa-CKc and the enables ENa-ENc "high" so as to operate the latch circuit group 120, ... in each step.

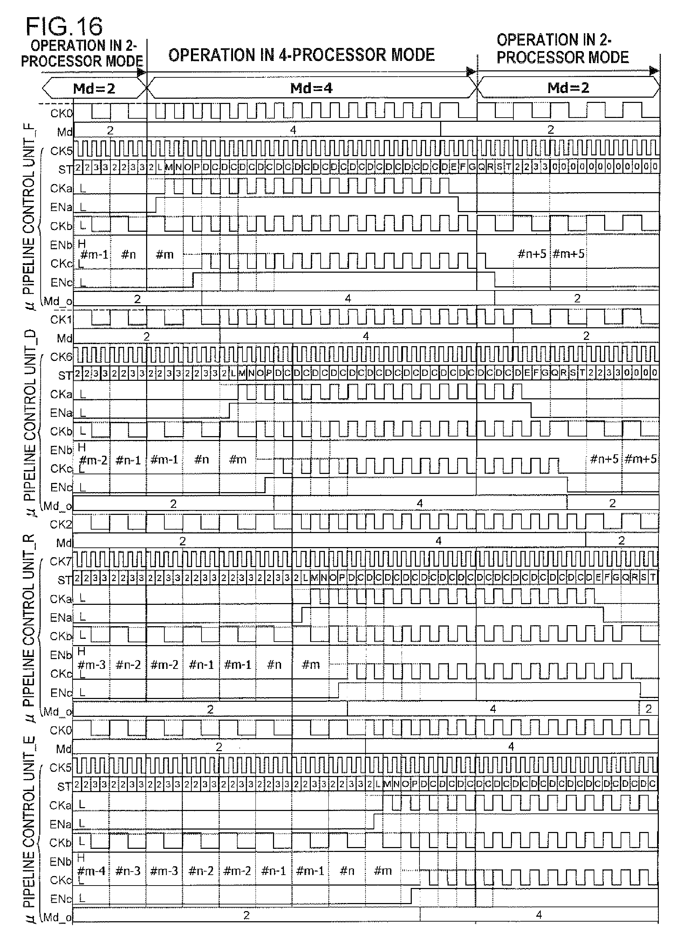

FIG. 16 illustrates an example of timing chart including the state ST of each pipeline control unit 110, ..., 510. For example, in the fetch stage 100, after the shift from the 2-processor mode to the 4-processor mode, the state ST is successively shifted to "2", "L", "M", ..., which is different from the shifted state ST ("0", "8", "9", ...) immediately after the shift from the 1-processor mode to the 4-processor mode, because the state ST before the shift is different between the both cases. However, the state ST thereafter is repeated to have "D", "C", and accordingly, the state ST of the fetch stage 100 is shifted similar to the case of the shift from the 1-processor mode to the 4-processor mode.

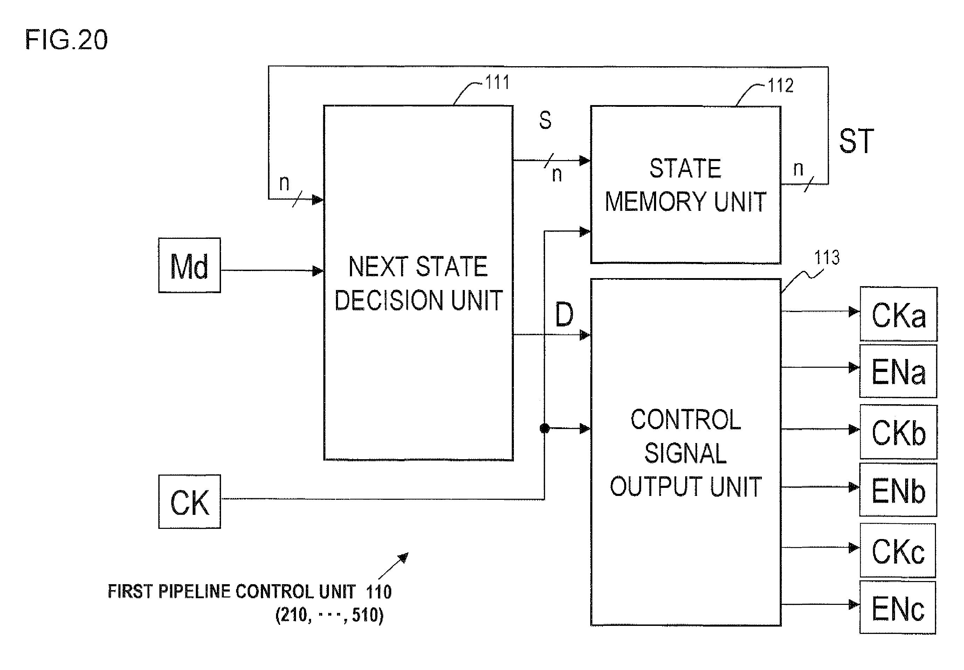

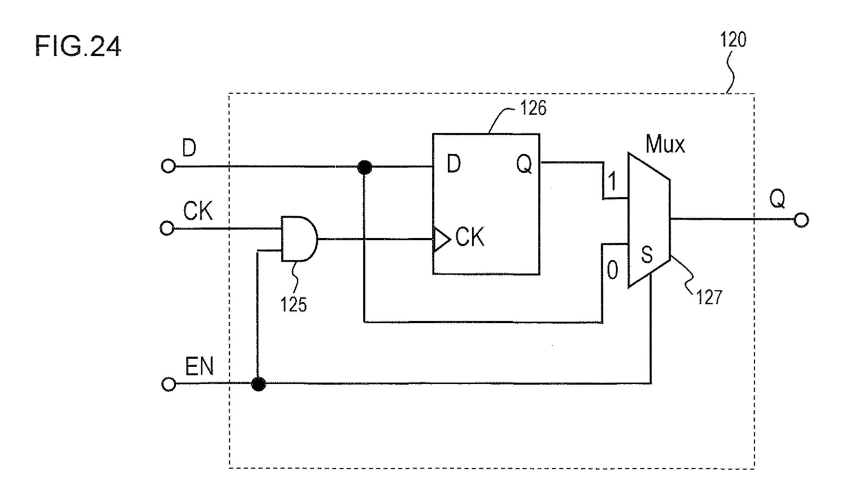

Next, description will be given on the configurations and the operation (FIGS. 17-19) of the first to the fifth clock inverters 920-960 in the clock control unit 900. Subsequently, description will be given on the configurations and the operation (FIGS. 20-23) of the first to the fifth pipeline control units 110, ..., 510, and finally, on the configurations and the operation (FIG. 24) of the latch circuit groups 120, ... in the first to the third steps of each stage 100, ..., 500.

FIGS. 17-19 illustrate an example of configuration and operation of the first clock inverter 920. Because each clock inverter 920-960 has an identical configuration, description is given on the configuration of the first clock inverter 920.

The clock inverter 920 includes a next state decision unit 921, a state memory unit 922, and a control signal output unit 923. The next state decision unit 921 is a combinational logic circuit, and the state memory unit 922 and the control signal output unit 923 are flip-flops.

The next state decision unit 921 inputs the mode Md, clock LK, and state ST, and outputs a next state S, a logic signal D, and a mode SMdr. The state memory unit 922 stores the next state S, and after one cycle of the supplied clock CK (8-times speed clock (×8_CLK)), outputs the stored next state S as a present state ST to the next state decision unit 921. The control signal output unit 923 inputs the mode SMdr and the logic signal D, and after one cycle of the clock CK, outputs a clock Q and a mode Mdr.

Here, the clock Q is the clock CKO, while the clock Q is each clock CK1-CK4 when the clock inverter 920 is replaced by one of the second to the fifth clock inverters 930-960.

Further, the mode Mdr is input to the clock inverter 930 in the next step, as mode Md. In regard to other clock inverters 940-960, the mode Mdr is input from the clock inverter 930-950 in each preceding step.

Further, the clock inverter 920 inputs the clock CK (8-times speed clock (×8_CLK)), and each unit 921-923 is operated in synchronization with the above clock CK.

As described earlier, the clock LK is a clock supplied from the first pipeline control unit 110, and indicates the present mode of the clock under which the first pipeline control unit 110 is being operated. The next state decision unit 921 uses the clock LK for the purpose of confirmation. To the other clock inverters 930-960 also, the clock LK is input from each pipeline control unit 210, ..., 510.

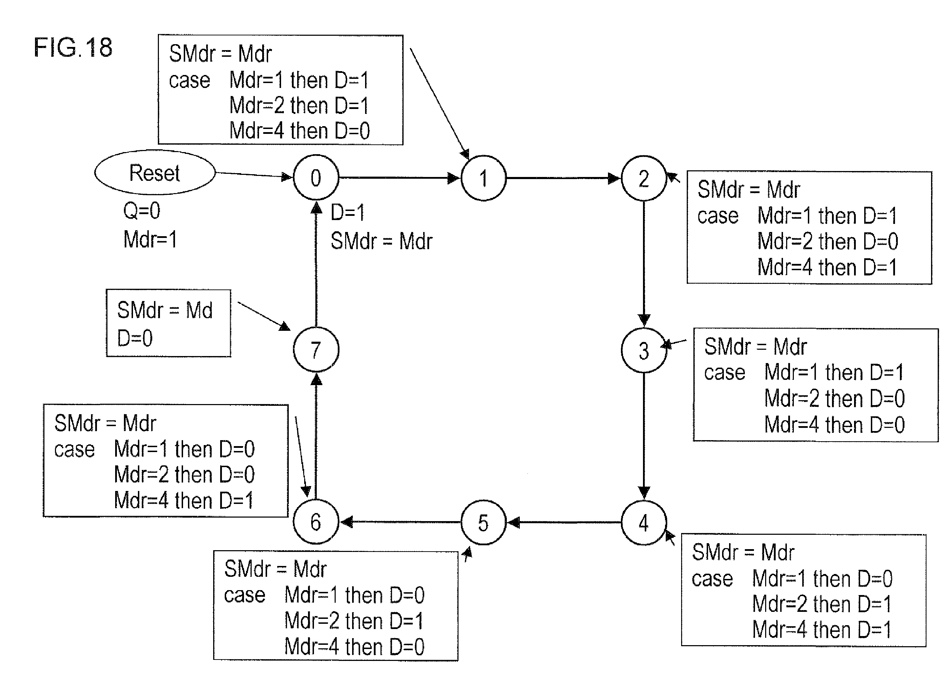

FIG. 18 illustrates an example of state transition of the clock inverter 920. As illustrated in FIG. 18, the clock inverter 920 is shifted among eight states ST from "0" to "7". Description in each rectangle illustrated in FIG. 18 indicates a processing content to be executed by the clock inverter 920 in each state.

The clock inverter 920 outputs the logic signal D and the mode SMdr from the next state decision unit 921, based on the input mode Md (or Mdr) and the present state ST (numeric in a circle).

For example, when the clock inverter 920 is reset (Reset), the clock inverter 920 outputs "0" as the output clock Q, also outputs "1" to the clock inverter 930 in the next step, as the mode SMdr, and then is shifted to the next state "0". When the clock inverter 920 is shifted to the state "0", the next state decision unit 921 outputs "1" as the logic signal D, and also outputs "0" as the mode SMdr. Then, when the clock inverter 920 is shifted to the state "1", the next state decision unit 921 outputs the input mode Md as the mode SMdr, outputs the logic signal D according to the mode Mdr, and is then shifted to the next state "2". Thereafter, the clock inverter 920 repeats the above process. Such state transition is predetermined, and is stored in the memory of the next state decision unit 921, for example.

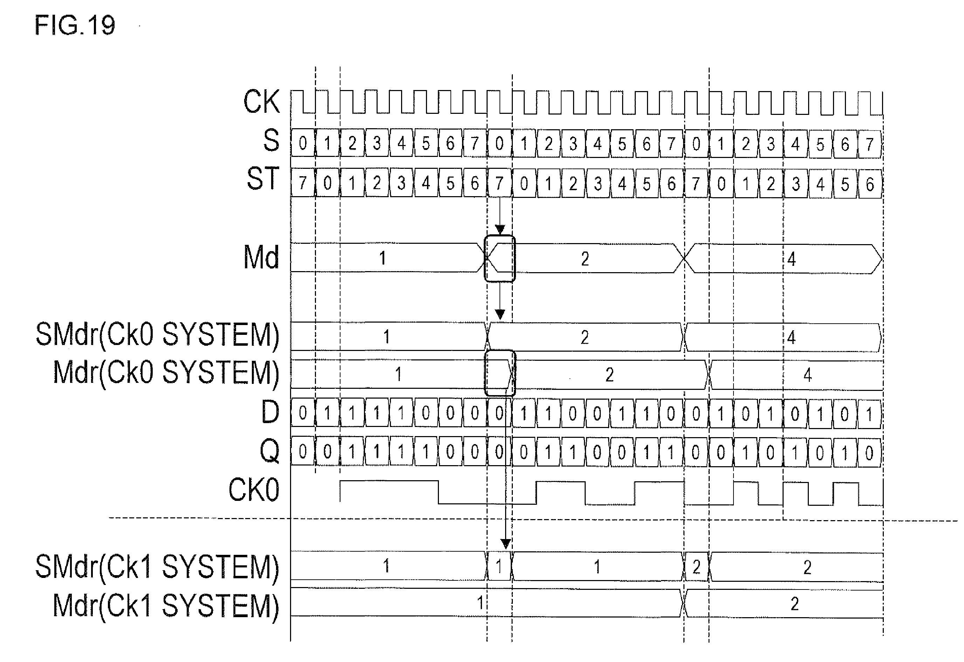

FIG. 19 illustrates an example of timing chart of the clock inverter 920. For example, when the present state ST is "7" and the mode Md is "2", the next state decision unit 921 outputs "2" as the mode SMdr, and "0" as the logic signal D (also refer to the state transition diagram in FIG. 18). Then, after one clock cycle, the control signal output unit 923 outputs the logic signal D="1", as the clock Q (=clock CK0). By the successive repetition thereof, the clock inverter 920 outputs the clock Q (=clock CK0).

Additionally, the clock inverter 930 in the next step performs the aforementioned processing based on the mode Mdr from the first clock inverter 920 and the present state ST. The same as the above is applied to the other clock inverters 940-960.

As such, the clock inverters 920-960 respectively supply the clocks CK0-CK4 to the first to the fifth latch circuits 150, ..., 550 (refer to FIG. 1). The first to the fifth latch circuits 150, ..., 550 latch and output instructions etc. from upstream by means of the clocks CK0-CK4 corresponding to each processor mode, and accordingly, each stage 100, ..., 500 can process the instructions etc. from upstream in the cyclic period corresponding to each processor mode (refer to FIGS. 10, 13 and 16).

Next, the configurations and operation of the pipeline control units 110, ..., 510 will be described by reference to FIGS. 20-23. Since the other pipeline control units 210, ..., 510 have the same configuration, description is given on the first pipeline control unit 210 as an example.

FIG. 20 illustrates a configuration example of the first pipeline control unit 110. The pipeline control unit 110 includes a next state decision unit 111, a state memory unit 112, and a control signal output unit 113. The next state decision unit 111 is a combinational logic circuit, while the state memory unit 112 and the control signal output unit 113 are flip-flops. The pipeline control unit 110 acts as state machine.

The next state decision unit 111 input the mode Md and the present state ST stored in the state memory unit 112, and outputs the next state S and the signal D. The state memory unit 112 stores the next state S, and after one cycle of the clock CK (8-times speed clock (×8_CLK)), outputs the stored state ST to the next state decision unit 111. Further, the control signal output unit 113 inputs the signal D from the next state decision unit 11, and after one cycle of the clock CK, outputs the clocks CKa-CKc and the enables ENa-ENc according to the signal D.

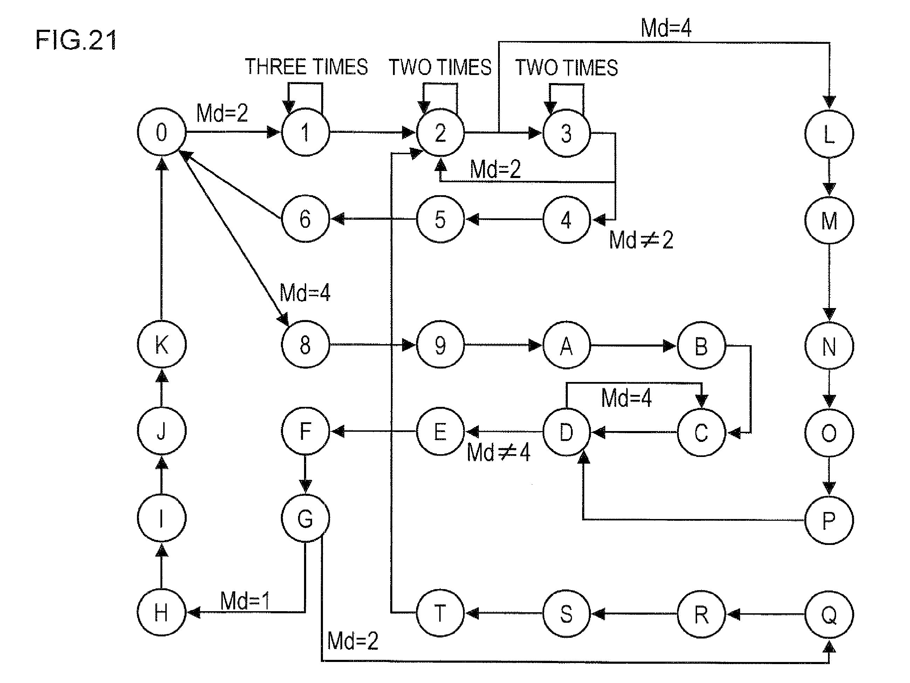

FIG. 21 illustrates an example of state transition in the first pipeline control unit 110. Circled numerals in the same figure indicate states. The pipeline control unit 110 totally has 29 states of transition, from "0" to "6" and from "8" to "P".

For example, as illustrated in FIG. 21, when the state is "0" and the mode Md is "2" (2-processor mode), the pipeline control unit 110 is shifted to the next state "1" after one cycle of the clock CK, and repeats the state "1" for consecutive three clock cycles. Also, after the state "3" is consecutively repeated twice, the pipeline control unit 110 is shifted to the state "2" when the mode Md is "2", or is shifted to the state "4" when the mode Md is other than "2". The states of the pipeline control unit 110 are shifted to be "0" → "1" → "1" → "1" → "2" → "2" → "3"... Such state transition is predetermined and stored in the memory of the pipeline control unit 110, for example.

Also, the next state decision unit 11 outputs the signal D corresponding to the determined next state S to the control signal output unlit 113. Based on the state signal D, the control signal output unit 113 generates and outputs the clocks CKa-CKc and the enables ENa-ENc.

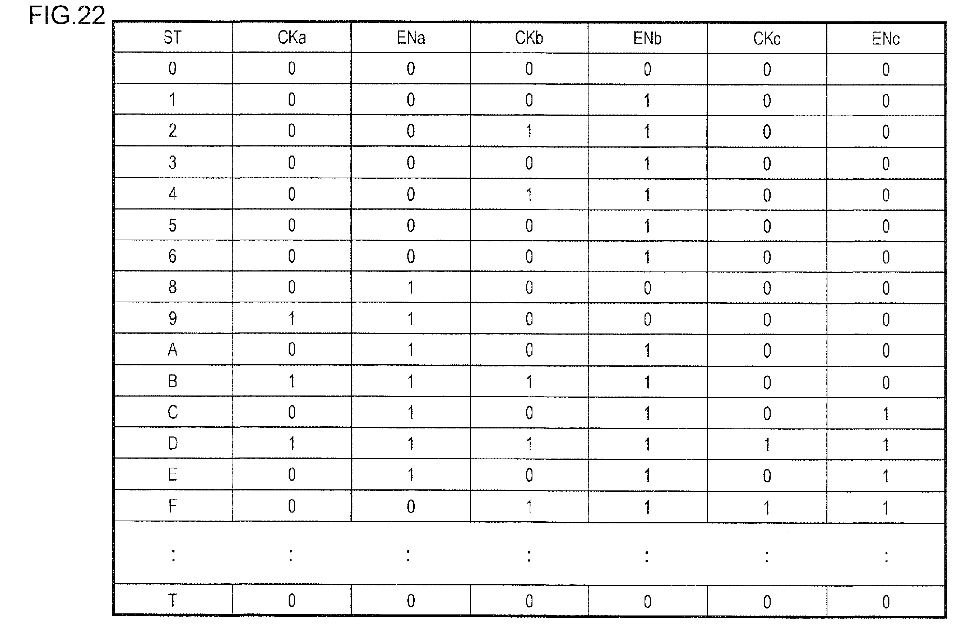

FIG. 22 illustrates the relationship of correspondence in regard to the state ST versus the clocks CKa-CKc and the enables ENa-ENc. With the provision of the table illustrated in FIG. 22, the control signal output unit 113 latches the state signal D, and after being shifted to the present state ST after one cycle of the clock CK, outputs the clocks CKa-CKc and the enables ENa-ENc corresponding to the state ST. For example, when the state ST is "0", the control signal output unit 113 outputs signals to set the entire clocks CKa-CKc and the entire enables ENa-ENc to be "0 (= Low)", while when the state ST is "1", the control signal output unit 113 outputs signals to set only the enable ENb to be "1 (= High)" and the others to be "0".

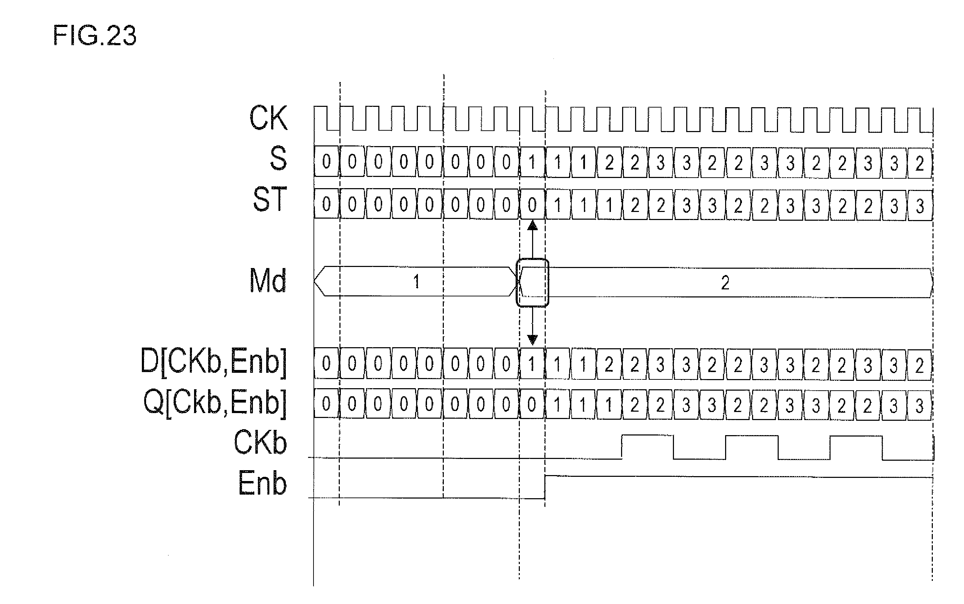

FIG. 23 illustrates an example of timing chart in the first pipeline control unit 110. When the state ST from the state memory unit 112 is "0" and the mode Md is "2", the next state decision unit 111 sets the next state S to be "1", so as to output to the state memory unit 112 (also refer to FIG. 21), and sets the signal D indicating the next state S to be "1", so as to output to the control signal output unit 113. The control signal output unit 113 latches "1", and outputs the clocks CKa-CKc and the enables ENa-ENc in which only the enable ENb is set to be "1", by referring to the table illustrated in FIG. 22. The first pipeline control unit 110 successively repeats the above process, and outputs the clocks CKa-CKc and the enables ENa-ENc. The same processing is performed in the other pipeline control units 210, ..., 510.

The above-mentioned example is merely one example. With the provision of the table illustrated in FIG. 22 internally, the next state decision unit 111 may output a 6-bit signal D according to the next state S (or the state ST). Each bit in the signal D corresponds to each of the clocks CKa-CKc and the enables ENa-ENc, and the control signal output unit 113 outputs the clocks CKa-CKc and the enables ENa-ENc according to the signal D.

As in the above-mentionedmanner, each pipeline control unit 110, ..., 510 outputs the clocks CKa-CKc and the enables ENa-ENc, and each stage 100, ..., 500 operates the latch circuit groups 120, ... in an arbitrary step among the first to the third steps. By this, the multiprocessor 10 is operated as the 4-processormode, the 2-processor mode, or the 1-processor mode, so as to process instructions by four processors, two processors, or the like.

Finally, description will be given on the configurations and operation of the latch circuit groups 120, ... in the first to the third steps in each stage 100, ..., 500.

FIG. 24 illustrates the configuration example of latch circuit 120-1 (hereafter simply referred to as "latch circuit 120" for the simplification of explanation, unless otherwise noted) in the latch circuit group 120 of the first step. Other latch circuits 120-2 to 120-11 in the latch circuit group of the first step 120 have the same configuration as the latch circuit 120, and also, each latch circuit 121-1, ... constituting each latch circuit group 121, ... in each stage 100, ..., 500 has the same configuration.

The latch circuit 120 includes an AND gate 125, a D flip-flop 126, and a multiplexer 127.

When both the clock CK (CKa in the case of the latch circuit groups in the first step 120, ..., 520) and the enable EN (ENa in the case of the latch circuit groups in the first step 120, ..., 520) are "1", the AND gate 125 outputs a logical sum "1" to the clock terminal CK of the D flip-flop 126. The D flip-flop 126 updates the internal state by the rise edge of the logical sum "1" that is input to the clock terminal CK, latches an instruction code etc. input to a terminal D, and during the above "1", outputs the latched instruction code etc. through a terminal Q. When the enable EN is "1", the multiplexer 127 selects and outputs the instruction code etc. output from the output terminal Q of the D flip-flop 126, while when the enable EN is "0", the multiplexer 127 directly outputs the input instruction code etc.

As such, the latch circuit 120 uses the enable EN as a selection signal to select an input in the multiplexer 127. Thus, even if the enable EN is "0", the latch circuit 120 can bypass and output the input instruction code etc.

Because the latch circuit 120 can be operated in the above-mentioned manner, for example, when the clock CKb and the enable ENb are "high" as illustrated in FIG. 10, each latch circuit group in the second step 121, ..., 521 of each stage 100, ..., 500 latches the instruction code etc. from upstream, and is operated in the 2-processor mode.

As having been described above, in the present multiprocessor 10, each stage 100, ..., 500 performs 4-stage pipeline processing by means of the latch circuit groups in the first to the third steps 120, ..... By operating each latch circuit group 120, ..., the multiprocessor 10 can be operated in four processors, two processors or one processor. Thus, because the present multiprocessor 10 can be configured of one processor, space saving can be achieved as compared to the case of configuring a multiprocessor with four processors, for example. Also, because the present multiprocessor 10 may operate one processor, power saving can be achieved as compared to the case of a multiprocessor configured of four processors.

The example described above illustrates the case of the single processor to be operated as 4 processors, 2 processors or 1 processor. Further, in another way, by including only each second latch circuit group 121, ..., 521, each stage 100, ..., 500 can perform 2-step pipeline processing, and can be operated as 2 processors or 1 processor. Further, with the provision of the first to the seventh latch circuit groups, each stage 100, ..., 500 can perform 8-step pipeline processing and can be operated as 8, 4, 2 processors or 1 processor. Further, with the provision of the first to the 31st latch circuit groups, each stage 100, ..., 500 can perform 32-step pipeline processing, and can be operated as 32, 16, 8 processors, or the like.

The achievable number of steps depends on the number of instruction bits etc. processable by the multiprocessor. More specifically, in the above-mentioned examples, it has been described that the number of bits processable by the multiprocessor 10 is 32 bits. By achieving 4-step pipeline processing, it is possible to process on an 8-bit basis. Also, it is possible to process on a 4-bit basis by means of 8-step pipeline processing, or on a 2-bit basis by means of 16-step pipeline processing, or even on a 1-bit basis by means of 32-step pipeline processing.

In summary, when the number of bits processable in the present multiprocessor 10 is 2ⁿ (where n is a natural number of 1 or more), eachstage 100, ..., 500 can perform pipeline processing having 2^{k} steps, by means of the latch circuit groups of the first to the (2^{k}-1)-th steps (where 1≤k≤n), making it possible to operate in such a manner as to have the respective numbers of processors of 1 (=2°) processor, 2 (=2¹) processors, ..., 2^{k} processors. The above-mentioned example is a case of n=4 (32 bits) and k=2 (4-step pipeline).

Here, as illustrated in FIG. 8 etc., after each stage 100, ..., 500 is successively shifted to each processor mode, each stage 100, ..., 500 is operated entirely under the same processor mode. For example, after the entire stages 100, ..., 500 are shifted to the 2-processor mode, a case that only the certain stage 100, ..., 500 (for example, the decode stage 200) is shifted to another processor mode does not occur.

In the aforementioned example, the explanation has been given on the case of the multiprocessor 10 having each stage 100, ..., 500 in one processor. However, it is also possible to implement a multiprocessor 10 having a plurality of such the processors.

Further, in the aforementioned example, the description is given on the case that the data memory 800, the instruction RAM 700 and the clock control unit 900 are provided outside the processor 10. However, it may also be possible to provide, for example, any or the whole of the data memory, the instruction RAM 700 and the clock control unit 900 within the multiprocessor 10.

Further, in the a forementioned example, the description is given on the multiprocessor 10 having 5 stages. However, it may also be possible to configure the multiprocessor 10 having 3 stages (for example, the decode stage 200 and the data read stage 300 form one stage, and the calculation stage 400 and the data write stage 500 form one stage) or 4 stages (for example, the calculation stage 400 and the data write stage 500 form one stage) . With arbitrary combinations of each stage 100, ..., 500, the multiprocessor 10 having 2 to 4 stages may be configured.

## Claims

1. A multiprocessor of a single processor, comprising:
a pipeline processing unit which successively fetches an instruction sequence to be independently processed on each of the multiprocessor with a shifted phase in one cycle.

2. The multiprocessor according to claim 1, further comprising:
a pipeline control unit which input amode signal, and controls the pipeline processing unit to be operated as a pipeline of one or plurality of steps based on the mode signal.

3. The multiprocessor according to claim 2, further comprising:
apluralityof stages which process the instruction sequence;
a plurality of latch circuits which latch the mode signal output from each of the stages; and
a clock control unit, wherein
the clock control unit inputs the mode signal, and controls each of the latch circuits to latch the mode signal output from each of the stages in each latch circuit according to the operation of the pipeline processing unit, so as to successively output to each of the stage, based on the mode signal.

4. The multiprocessor according to claim 3, wherein each of the stage includes the pipeline processing unit and the pipeline control unit, and
each of the stages is operated as the pipeline by that the pipeline control unit in each of the stages controls the pipeline processing unit based on the mode signal from each of the latch circuits.

5. The multiprocessor according to claim 2, wherein
the pipeline processing unit includes a latch circuit group in a plurality of steps, and
the pipeline control unit operates the pipeline processing unit as the pipeline in one or a plurality of steps by operating the latch circuit in a predetermined step of the plurality of steps based on the mode signal.

6. The multiprocessor according to claim 3, wherein each of the plurality of stages includes:
a fetch stage which reads out the instruction sequence from an instruction memory based on a calculated instruction address, and outputs each instruction code of the readout instruction sequence,
a decode stage which inputs the instruction code, outputs a memory address to read out a first data stored in a data memory, and outputs a register number to read out a second data stored in a register,
a data read stage which inputs the memory address and the register number, reads out and outputs the first data stored in the memory address from the data memory, and reads out and outputs the second data stored in the register number from the register,
a calculation stage which inputs the first data and the second data, calculates the first data and the second data based on the instruction code, and outputs a calculation result, and
a data write stage which inputs the calculation result, and writes the calculation result into the data memory or the register.
